# EUROPEAN PATENT APPLICATION

(11) **EP 3 715 623 A1**
(43) Date of publication of application: **30.09.2020**
(21) Application number: 18882106.0
(22) Date of filing: 21.11.2018
(51) Int. Cl.: F03D 3/04, F03D 3/02, F03D 9/25

(54) **POWER DEVICE FOR INCREASING LOW FLOW RATE**

(30) Priority: 24.11.2017 CN 201711186506
(71) Applicant: Li, Yibo, Lanzhou, Gansu 730000 (CN)
(72) Inventor: LI, Feng, Suzhou Jiangsu 215000 (CN); LI, Hongchun, Suzhou Jiangsu 215000 (CN); LI, Yibo, Lanzhou Gansu 730000 (CN)
(74) Representative: Inchingalo, Simona
(86) International application number: PCT/CN2018/116733
(87) International publication number: WO 2019/101106

(57) **Abstract**

A power device for increasing low flow rate, particular a power device for increasing low wind speed and low tidal current speed is provided, which can be applied to low speed wind power generation and tidal current power generation, belonging to power or electric generation device technical field. The power device for increasing low flow rate includes at least two wind wheels between which a windshield device (F1, F2, F3) is disposed. The wind wheels located at two sides of the windshield device (F1, F2, F3) have opposite rotation directions. The rotation direction is set to allow a power output azimuth region of the blade (2) to be located at a side adjacent to the windshield device (F1, F2, F3). The effect is that the windshield device (F1, F2, F3) increases the wind speed passing through the power output azimuth region of the blade (2), thereby increasing the power of the wind wheel and significantly increasing Cp at low wind speed. The tested results show that the wind power utilization coefficient Cp at low wind speed (2-10 m/s) is increased by 22% on average. By applying the power device for increasing low flow rate in combination with the FW blade (2) having a high efficiency at low flow rate, the electric energy production at low wind speed increase 3 to 4 times as compared to prior art.

## Description

### Technical Field

The present disclosure relates to a device for generating power by using kinetic energy of a fluid, in particular to a power device capable of increasing low wind speed and low tidal current speed, which can be applied to low speed wind power generation and tidal current power generation. The present disclosure belongs to the technical field of power devices or electric generation devices.

### BACKGROUND

The current wind power generation technology has poor performance at low wind speed, and can bring economic benefits only in windy regions having an annual mean wind speed larger than 6 meters per second (m/s). The tidal currents have low speed, which makes them difficult to be directly used for power generation in prior art. The so-called tidal power generation generally refers to a power generation achieved by driving a water turbine generator using a water level difference between high tide and low tide inside and outside the barrage, which has a low water head and a high power generation cost.

In natural environment, low speed wind occurs a lot more frequently than high speed wind in terms both of periods and regions. Taken China for example, it is estimated that the area of windy regions having an annual mean wind speed larger than 6 m/s is smaller than 8 % of the total territorial area of China, while the area of windy regions having an annual mean wind speed of 3 m/s to 5 m/s is larger than 60 % of the total territorial area of China. An annual mean cumulated time at a certain wind speed is estimated according to Rayleigh statistics. For the windy regions having the annual mean wind speed of 3 m/s to 5 m/s, a windy time at a wind speed of 3 m/s to 8 m/s is 5000 to 6000 hours every year, and a windy time at a wind speed larger than 10 m/s is 50 to 600 hours every year. The former accounts for 60% to 70% of the total time in one year, while the latter accounts for only 0.6% to 7% of the total time in one year.

Although the tidal current speed is much lower than the available wind speed, the energy density of the tidal current is substantially the same as that of the available wind energy because the density of water is much higher than that of the air. If the mean speed of the diurnal tide can reach 1.0 m/s to 1.5 m/s, it is estimated that the power generation cost by using the tidal current is lower than the power generation cost by using the offshore wind. The available amount of the tidal current energy resource is much more than that of the wind energy resource. Taken China as example, it is estimated that the tidal current energy resource is 70 times of the wind energy resource. Therefore, the researches of efficient low speed wind power generation and tidal current hydro power generation technologies have great economic and environmental benefits.

A power of a wind turbine is P_{M}=CpP= 1/2ρACpW³, wherein Cp denotes a wind energy utilization coefficient, which is a parameter used to evaluate a performance of the wind turbine. A power of wind is P=1/2ρAW³, wherein ρ denotes the density of air, A denotes a swept area of a wind wheel, and W denotes the wind speed. According to specialist overview (Renewable and Efficient Electcic Power Systems, by Gilbert M. Masters, ISBN 0-471-28060-7, John Wiley&SonsInc., Chapter 6, Wind Power Systems, p.307-383) and researches (for example, Paraschivoiu,I., Wind Turbine Design With Emphasis on Darrieus Concept, Presses internationales Polytechnique, 2002, P.148), a theoretic optimum value of Cp of a horizontal axis wind turbine is Cpₘₐₓ≈0.59, and a theoretic optimum value of Cp of a vertical axis wind turbine is Cpₘₐₓ≈0.64. However, the optimum performance achieved in prior art is that Cpₘₐₓ of the horizontal axis wind turbine is 0.45 and Cpₘₐₓ of the horizontal axis wind turbine is 0.35. Moreover, Cp = Cp(λ, Φ, θ), in other words, Cp is changed with the change of the tip speed ratio λ, the pitch angle Φ, and the yaw angle θ (wind direction). When λ is in a range of 4 to 6, Cp is Cpₘₐₓ. One of disadvantages of the horizontal axis technology is that a value of Φ corresponding to its Cpₘₐₓ is changed with the change of the wind speed or the wind direction. Therefore, a variable pitch control have to be performed to regulate the value of Φ, and a yaw control have to be performed to follow the wind direction, so as to achieve a performance approaching Cpₘₐₓ during operation. The variable pitch control may improve a cost performance of a large-scale turbine; however, it will reduce a cost performance of a medium-scale turbine or a small-scale turbine to some extent. The smaller the turbine, the poor the cost performance. Therefore, the medium-scale turbine and the small-scale turbine are generally fixed-pitch types (i.e. stalled types), and their Cps at mean wind speeds smaller than rated wind speeds is C̅p∼0.20. That is the reason why the power generation costs of the medium-scale turbine and the small-scale turbine are higher than that of the large- scale turbine. In recent decades, the development of the horizontal axis technology mainly involves optimizing the variable pitch control and improving the cost performance by increasing size; however, a further increase of the Cp is failed. For the vertical axis technology, the yaw control is not necessary, but variation of blade pitch is difficult to be achieved; in addition, its Cp at the mean wind speed smaller than the rated wind speed is C̅p∼0.15. Although the vertical axis technology has been researched by many people in recent decades since its advent, its Cp value is still smaller than that of the horizontal axis technology, suggesting how difficult to increase the Cp of the wind turbine. The tip speed ratio λ is defined as a ratio of a speed of a blade tip to the wind speed. A high speed turbine has a λ>4, and a low speed turbine has a λ<2. The wind turbine in prior art is the high speed turbine in regarding to its performance, but at low wind speed, its Cp is small due to its small λ. In prior art, the power at the low wind speed has to be increased by increasing an area A of the wind wheel, which, however, has disadvantages of increased wind turbine cost and increased wind turbine weight, thus making no contribution to decrease of the cost of the wind energy utilization.

The essence of improving the wind turbine performance is to increase Cp. The inventors have recognized during the long term experiments, analyses, and researches that the low Cp of the vertical axis wind turbine may be due to the method for researching blades. The inventors have created methods for researching a strongly turbulent vertical axis flow field and for designing the blade, which are totally different from the airfoil design methods. After unremitting explorations, the inventors developed FW blades which are efficient at the low flow rate, and its Cpₘₐₓ reaches 0.50 in the range of λ<2, which breaks through the technical bottleneck that vertical axis Cp is smaller than the horizontal axis Cp. Moreover, the blades are fixed-pitch efficient types, and Cp at a mean wind speed in a wind speed range of 2 m/s to 10 m/s is C̅p∼0.45.

### SUMMARY

An object of the present disclosure is to, in view of the disadvantage in prior art that the power generation efficiency is low at a low flow rate state, provides a power device capable of effectively increasing the utilization efficiency of the low flow rate fluid (hereafter abbreviated as a power device for increasing low flow rate) is provided, which can be applied to both of the wind power generation and the water power generation and also can supply power for other applications.

Terms in wind energy art are used to describe the technical solutions of the present disclosure, and the terms may be changed according to different applications in the embodiments. For example, for the application in water, "wind wheel" is changed to "water wheel", and "wind speed" is changed to "current speed" etc., while the term "windshield" is still adopted.

In the present disclosure, the technical problem is solved by the following technical solution. A power device for increasing low flow rate includes a load-bearing body, a truss connected to the load-bearing body, and at least two wind wheels connected to the truss. The truss and the wind wheels constitute a vertically-constrained horizontal-revolute pair. The wind wheels are respectively distributed at two sides of a center vertical line of the truss. A windshield device is located between the wind wheels, and the wind wheels located at two sides of the windshield device have opposite rotation directions; or a windshield device is further disposed in the wind wheel; or a windshield device is further disposed between adjacent upper and lower wind wheels. The power of the wind wheel is controlled by regulating an azimuth or a wind-blocking area of the windshield device without increasing the swept area of the wind wheel, so as to achieve the increased Cp at low wind speed, thereby reducing the cost for utilizing the wind energy or the tidal energy.

The specific technical solution to achieve this object is as follows.

A power device for increasing low flow rate includes a load-bearing body, a truss connected to the load-bearing body, and at least two wind wheels connected to the truss. The wind wheel includes a wheel frame and a plurality of blades uniformly distributed at a periphery of the wheel frame. The truss and the wind wheels constitute a vertically-constrained horizontal-revolute pair. The wind wheels are respectively disposed at two sides of a center vertical line of the truss. The characteristic is that a windshield device is disposed between the wind wheels, the wind wheels located at two sides of the windshield device have opposite rotation directions, rotation directions of the wind wheels are set to allow a power output region of the blade to be located at a side adjacent to the windshield device, the truss is rotatably connected to the load-bearing body, and a rotation axis of the truss and rotation axes of the wind wheels are located in a same vertical plane.

Furtermore, the wheel frame of the wind wheel includes a spindle-containing wheel frame and a spindle-free wheel frame. When the wheel frame is the spindle-containing wheel frame, the wheel frame of the wind wheel comprise a spindle and cantilevers, one end of the cantilever is directly or indirectly connected to the spindle, and the other end of the cantilever is directly or indirectly connected to the blade. When the wheel frame is the spindle-free wheel frame, the wheel frame comprises cantilevers, one end of the cantilever is connected to the truss or a load via a bearing, and the other end of the cantilever is directly or indirectly connected to the blade. If the blade is connected to the cantilever via a baffle, the blade is indirectly connected to the cantilever. If the cantilever is connected to the spindle via a flange, the cantilever is indirectly connected to the spindle. It should be noted that the indirect connection is not limited thereto.

In the above-described technical solutions, a windshield device can be disposed in the wind wheel. A horizontal size of the windshield device is smaller than a diameter of the wind wheel. A vertical size of the windshield device is smaller than a height of the wind wheel.

The truss includes a plurality of cross beams, a plurality of upright columns to support the plurality of cross beams, and optionally, a plurality of inclined struts. When the truss includes more than two cross beams, a truss structure having a plurality of rows of cross beams in a vertical direction is constituted. A windshield device is further disposed between upper and lower wind wheels in two adjacent rows.

A structure of the windshield device includes a windshield device formed by a sheet or a column, and a windshield device formed by a combination of a sheet and a column. A sealed hollow cavity is defined in the windshield device. A shape of the windshield device includes a planar plate, a curved plate, an arc-shaped plate, a triangular prism formed by planar plates, by curved plates, by arc-shaped plates, by two curved plates and one planar plate, by two planar plates and one curved plates, a half-cylinder, a trapezoidal prism, a cylinder, a cylindroid, and a column having a sinuous surface. However, the shape of the windshield device is not limited thereto.

A power control of the wind wheel can be achieved by regulating an azimuth or a wind-blocking area of the windshield device. Or a wind rudder is further provided to follow the wind direction to avoid an oscillation caused by varied wind direction during regulating the windshield.

Aplacement manner of the load-bearing body comprises placing on ground, placing under water, floating on water surface, standing on water bottom while protruding out from water surface, and floating in air.

When the load-bearing body is placed on ground or under water, the load-bearing body comprises a tower standing on the ground, or comprises a base located under the water and a tower fixedly connected to the base, a top of the tower is connected to the truss, the wind wheels are connected to the truss, and the windshield devices are connected to the truss; or a windshield device is further disposed in the wind wheel.

When the load-bearing body floats on water surface, the load-bearing body comprises a plurality of buoys and a horizontal frame fixedly connected onto the buoys, a bottom surface of the horizontal frame is connected to the truss, the wind wheels are connected to the truss, and the windshield devices are connected to the truss, thereby obtaining a water turbine; or the load-bearing body comprises a plurality of buoys, a horizontal frame fixedly connected onto the buoys, and a tower standing on the horizontal frame, a top of the tower is connected to the truss, the wind wheels are connected to the truss, and the windshield devices are connected to the truss, thereby obtaining a wind turbine; or a complete of the water turbine is connected to a bottom of the horizontal frame of the wind turbine, thereby obtaining a wind and water dually-useful turbine; or the windshield device is further disposed in the wind wheel of the water turbine, the wind turbine, or the wind and water dually-useful turbine.

When the load-bearing body stands on water bottom while protrudes out from water surface, the load-bearing body comprises a plurality of pillars standing in water and a horizontal frame fixedly connected to portions of the pillars protruded out from the water surface, a bottom surface of the horizontal frame is connected to the truss, the wind wheels are connected to the truss, and the windshield devices are connected to the truss, thereby obtaining a water turbine; or the load-bearing body comprises a plurality of pillars standing in water, a horizontal frame fixedly connected to portions of the pillars protruded out from the water surface, and a tower standing on the horizontal frame, a top of the tower is connected to the truss, the wind wheels are connected to the truss, and the windshield devices are connected to the truss, thereby obtaining a wind turbine; or a complete of the water turbine is connected to a bottom of the horizontal frame of the wind turbine, thereby obtaining a wind and water dually-useful turbine; or the windshield device is further disposed in the wind wheel of the water turbine, the wind turbine, or the wind and water dually-useful turbine.

When the load-bearing body floats in air, the load-bearing body comprises a floater floating in the air and a rope-like member tied to the floater; the truss is connected to the rope-like member, the wind wheels are connected to the truss, and the windshield devices are connected to the truss, thereby obtaining a wind turbine floating in the air; or the windshield device is further disposed in the wind wheel; the wind turbine is anchored on ground or a building on the ground via an anchor cable.

Two to five blades are uniformly distributed at the periphery of the wheel frame, thereby obtaining a two-blade wind wheel, a three-blade wind wheel, a four-blade wind wheel, and a five-blade wind wheel, respectively. The blade is FW blade having a high efficiency at low flow rate. A number of the wind wheels disposed at two sides of a rotation axis of the truss are the same, and the wind wheels are symmetrically located at the two sides of the rotation axis of the truss.

The wheel frame has a multi-row structure. The cantilevers of the wheel frame are arranged in rows. Each blade has a plurality of sections. A number of the sections is corresponding to a number of the rows of the cantilevers. Each section of the blade is disposed at ends of the corresponding cantilevers located in the adjacent rows.

For the water turbine, the following technical solutions are further provided. The wheel frame is connected to a buoyancy-producing gas cabin. A shape of the gas cabin is a cylindrical shape, a conical shape, or a spherical crown shape. When the load-bearing body floats on the water surface, the load-bearing bodies are connected via the horizontal frames, thereby forming a floating water turbine set. The load-bearing body is shared by the water turbine and the wind turbine. A rotatable connection portion of the wheel frame with the load-bearing body is disposed above the water surface. The load-bearing body further include a load-bearing member which has been established on the water, for example, a bridge, a wharf trestle bridge, a hydrologic station trestle bridge, a floating island, a lighthouse, an aquaculture buoyancy tank, and so on.

The present disclosure has following beneficial effects as compared to the prior art.
1) The windshield device allows the incoming wind to pass through a region between its outer edge and the adjacent blade, which sharply increases the flux density of the wind passing through this region, thereby inevitably increasing the speed of the wind passing through this region (Bernoulli principle), while the setting of rotation direction allows the power output region of the blade to be established at the vicinity of this region; the two aspects have a combined effect that the windshield device increases the speed of wind passing through the power output region of the blade (the increase is significant especially for low speed wind), thereby increasing the power of the wind wheel without increasing the swept area and the weight of the wind wheel, thus solving the problem in the prior art, and significantly increasing the Cp at low wind speed.
2) The design that the rotation axis of the truss and the rotation of axes of the wind wheels are in the same vertical plane not only increases the Cp at low wind speed, but can automatically follow the wind direction to allows the upright column to keep away from the flowing path of the wind.
3) The power control can be achieved by regulating the azimuth and the wind-blocking area of the windshield device, thereby solving the problem in the prior art that the power control is difficult to be performed in the conventional vertical axis turbine. The power control in the prior art is achieved by regulating rotational components, which has a high cost. The windshield device in the present disclosure is not a rotational component, thereby having a low control cost, therefore, the economic performance is much higher than the prior art when applied to a turbine having a low rated wind speed or a small-scale turbine.
4) The gas inflation design for the enclosed hollow cavity in the windshield can produce buoyancy, thereby reducing the rotation resistance of the water wheel and the truss, which is favorable to the further increase of the Cp at low flow rate.
5) The windshield device fixedly connected to the upper and lower cross beams also has a function of referencing the rigidity of the truss.
6) By using the FW blade which is effective at low flow rate developed by the inventor, the operation is effective without the pitch varying system, and the Cp is significantly increased.
7) When the buoys is used to bear load, the building of the underwater foundation can be saved, and the effect is that the cost is reduced, the turbine can be anchored by an anchor chain or moved by a tugboat according to water conditions, which is convenient and flexible.
8) When the rotatable connection portions of the wheel frames with the load-bearing body are disposed above the water surface, the resistances of the dynamic seals of the rotatable connection portions can be reduced (since water-tightness is required, a dynamic seal in water is harder than that in air), which is advantageous to increase the Cp, moreover, the loads (for example, electric generators, gearboxes, clutches, and other components) can be disposed above the water surface, thereby avoiding the issues about water-tightness.
9) The design combing the water turbine and the wind turbine can share the load-bearing body to decrease the cost, and is very suitable for sea wind and tidal current power generation.
10) The cost for utilizing low speed wind is significantly reduced, thereby having the characteristic (i.e. high performance and low cost) of the advanced technology.

### BRIEF DESCRIPTION OF THE DRAWINGS

In the exemplary drawings, F1 represents a windshield device located between right and left wind wheels, F2 represents a windshield device located in a wind wheel, F3 represents a windshield device located between upper and lower wind wheels, a shadowing surface represents a windshield surface.
FIG. 1 is a schematic structural view of an embodiment 1 of the present disclosure.
FIG. 2 is a schematic structural view of an embodiment 2 of the present disclosure.
FIG. 3 is an enlarged view of a circled area in FIG. 2.
FIG. 4 is a schematic structural view of an embodiment 3 of the present disclosure.
FIG. 5 is a schematic view illustrating a power control in the embodiment 3 of the present disclosure.
FIG. 6 is a schematic structural view of a truss in the embodiment 1 of the present disclosure.
FIG. 7 is a schematic structural view of a truss in the embodiment 2 of the present disclosure.
FIG. 8 is a schematic structural view of a truss in the embodiment 3 of the present disclosure.
FIG. 9 is a schematic structural view of an embodiment 4 of the present disclosure.
FIG. 10 is a schematic view showing four combination types of the windshield device of the present disclosure.
FIG. 11 is a schematic structural view of an embodiment 5 of the present disclosure.
FIG. 12 is an enlarged schematic structural view of an upper area of FIG. 5.
FIG. 13 is a schematic structural view of an embodiment 6 of the present disclosure.
FIG. 14 is a schematic partial view of the embodiment 6 in another state of the present disclosure.
FIG. 15 is a schematic cross section structural view of a windshield device in the embodiment 6.
FIG. 16 is an enlarge view of a circled area in FIG. 15.
FIG. 17 is a schematic structural view of an embodiment 7 of the present disclosure.
FIG. 18 is a schematic structural view of a cantilever in the embodiment 7 of the present disclosure.
FIG. 19 is a schematic view of a FW blade having a high efficiency at low flow rate.
FIG. 20 is enlarged schematic structural view of a lower area of the embodiment 7.
FIG. 21 is a tested curve showing the change of Cp with the wind speed W and demonstrating the effect of the windshield device of the present disclosure.

### DETAILED DESCRIPTION

The present disclosure will now be described in detail with referent to the embodiments and the accompany drawings. Loads in the embodiments are represented with electric generators as example. However, it is not limited to the examples disclosed in the present disclosure. F1 to F3 denote windshield devices, in which different numerals indicate different types of the windshield devices.

### Embodiment 1

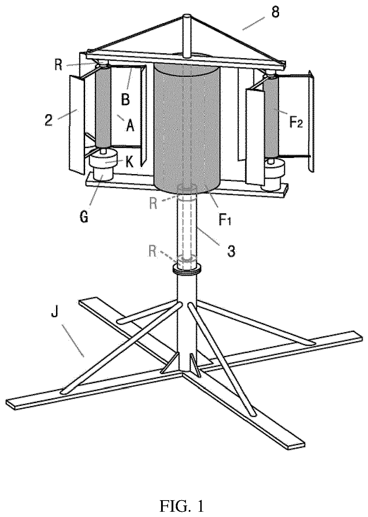

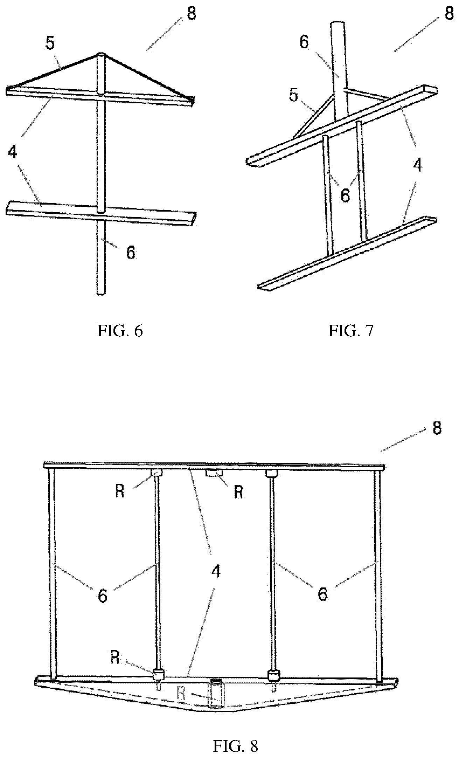

As shown in FIG. 1, in this embodiment, a load-bearing body includes a base J and a tower 3 fixedly connected to a top of the base J. A truss 8, as shown in FIG. 6, includes two cross beams 4, an upright column 6 fixedly connected to central portions of the cross beams 4, and two inclined struts 5 fixedly connected between the upper cross beam 4 and the upright column 6. A cylindrical barrel shaped windshield device F1 is sleeved outside the upright column 6, and its two ends are fixedly connected to the upper cross beam 4 and the lower cross beam 4. A lower section of the upright column 6 is rotatably connected to an inner wall of the tower 3 via two bearing seats R, so that the truss 8 is rotatable about a vertical rotation axis determined by the tower 3. A wind wheel includes a wheel frame and three blades 2 uniformly distributed at a periphery of the wheel frame. The wheel frame includes a spindle A and six cantilevers B. The spindle A includes a cylindrical barrel, flanges fixed at two ends of the cylindrical barrel, and spindle heads fixed in the flanges. The cylindrical barrel acts as a windshield device F2. One end of the cantilever B is fixedly connected to the flange of the spindle A, and the other end of the cantilever B is fixedly connected to the blade 2. The wind wheels and the truss 8 constitute an axially-constrained horizontal-revolute pair. Two wind wheels constitute a pair of counter-rotating wind wheels by placing the blades 2 of one wind wheel upside down with respect to the blades 2 of the other one wind wheel, and are respectively and rotatably connected to the cross beams 4 of the truss 8 via the bearings R, gearboxes K, and components of electric generators G. The wind wheel has its speed increased via the gearbox K and then drives the electric generator G. This embodiment is appropriate for both of the wind power generation and the hydro power generation.

### Embodiment 2

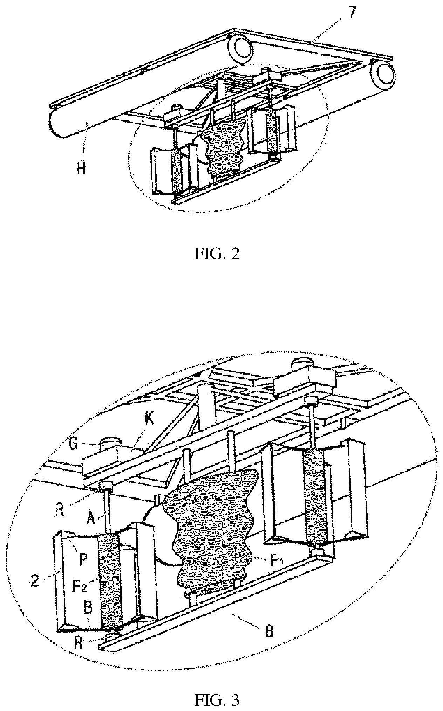

A water turbine in this embodiment is shown in FIG. 2. FIG. 3 is an enlarged view of a circled area in FIG. 2. A load-bearing body includes two buoys H and a horizontal frame 7 fixedly connected to tops of the buoys H. A truss 8, as shown in FIG. 7, includes two cross beams 4, an upper upright column 6 fixedly connected to a central portion of the upper cross beam 4, two inclined struts 5 fixedly connected between the upper cross beam 4 and the upper upright column 6, and two lower upright columns 6 fixedly connected between the two cross beams 4. A windshield device F1 shaped as a column having a sinuous surface is sleeved on and fixedly connected to outer surfaces of the two upper upright columns 6 via two cylindrical through holes defined therein. The upper upright column 6 of the truss 8 is rotatably connected to the horizontal frame 7 via a bearing (not shown) and is rotatable about a vertical rotation axis determined by the horizontal frame 7. A water wheel includes a wheel frame and three blades 2 uniformly distributed at a periphery of the wheel frame. The wheel frame includes a spindle A, six cantilevers B, and six baffles P. One end of the cantilever B is fixedly connected to the spindle A, and the other end of the cantilever B is fixedly connected to the blade 2 via the baffle P. A cylindrical barrel windshield device F2 is sleeved outside the spindle A, and its two ends are fixedly connected to the upper and lower cantilevers B. The water wheels and the truss 8 constitute an axially-constrained horizontal-revolute pair. Two water wheels constitute a pair of counter-rotating water wheels by placing the blades 2 of one water wheel upside down with respect to the blades 2 of the other one water wheel, and are respectively and rotatably connected between the two cross beams 4 via bearings R. Upper ends of the spindles A of the two water wheels respectively pass through holes defined at two ends of the upper cross beam 4 to be connected to gearboxes K located at two sides to drive electric generators G.

### Embodiment 3

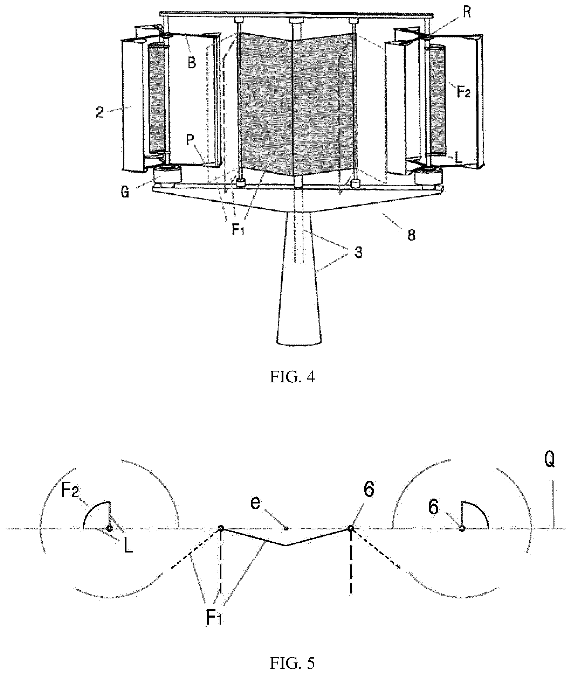

A wind turbine in this embodiment is shown in FIG. 4. A load-bearing body includes a tower 3 constituted by a conical tube and a cylindrical tube. A truss 8, as shown in FIG. 8, includes two cross beams 4, two outer upright columns 6 fixedly connected to the cross beams 4, and two inner upright columns 6 rotatably connected to the cross beams 4 via bearings R. The truss 8 is rotatably connected to the cylindrical tube of the tower 3 via a bearing R located at a central portion of the cross beam 4. A windshield device F1 includes two planer plates respectively and fixedly connected to the two inner upright columns 6. A wind wheel includes a wheel frame and three blades 2 uniformly distributed at a periphery of the wheel frame. The wheel frame includes six cantilevers B. One end of the upper cantilever B is connected to a bearing R via a flange. One end of the lower cantilever B is fixed connected to an outer rotor of an electric generator G. The other end of the upper cantilever B and the other end of the lower cantilever B are fixedly connected to the blades 2 via baffles P. A windshield device F2 includes a curved plated and cross-arms L fixedly connected to two ends of the curved plated. A circular ring of the cross-arm L is fixedly connected to the outer upright column 6. The wind wheels and the truss 8 constitute an axially-constrained horizontal-revolute pair. Two wind wheels constitute a pair of counter-rotating wind wheels by placing the blades 2 of one wind wheel upside down with respect to the blades 2 of the other one wind wheel, and are respectively and rotatably connected to the two outer upright columns 6 of the truss 8 via bearings R and electric generators G. An inner stator of the electric generator G is sleeved on a lower end of the outer upright column 6 and fixed connected to a top of the lower cross beam 4. A power control can be achieved by regulating azimuths of the planer plates fixedly connected to the inner upright columns 6 via controllers disposed in the lower cross beam 4.

FIG. 5 is a schematic view illustrating the power control in this embodiment. If the natural wind speed is high enough to cause a power of the wind wheel to be larger than a rated power, then control the inner upright columns 6 to rotate to move the planer plates fixedly connected to the inner upright columns 6 towards azimuths shown with broken lines, thereby forming a channel between windward edges of the two planer plates. The channel has a width in proportion to the wind speed. The channel allows an air volume in proportion to its width to pass through the region between the two inner upright columns 6, which reduces the air volume passing through regions between the wind wheel and the inner upright columns 6 and reduces the wind speed, thereby decreasing the power of the wind wheel. When the planer plates are at azimuths shown with solid lines, the wind speed at the regions between the wind wheel and the inner upright columns 6 is larger than the natural wind speed. When the planner plates are at azimuths shown with broken lines having relatively long dashes, the wind speed at the regions between the wind wheel and the inner upright columns 6 is approximately equal to the natural wind speed. When the planner plates are at azimuths shown with broken lines having relatively short dashes, the wind speed at the regions between the wind wheel and the inner upright columns 6 is smaller than the natural wind speed. As such, the power control of the wind turbine is achieved. A rotation axis (e point) of the truss 8 and rotation axes (centres of the outer upright columns 6) of the two wind wheels are coplanar with straight line Q to not only increase the Cp at the low wind speed but to enable to follow the wind direction. If these three axes are not coplanar, then the above-described two functions cannot be achieved simultaneously.

### Embodiment 4

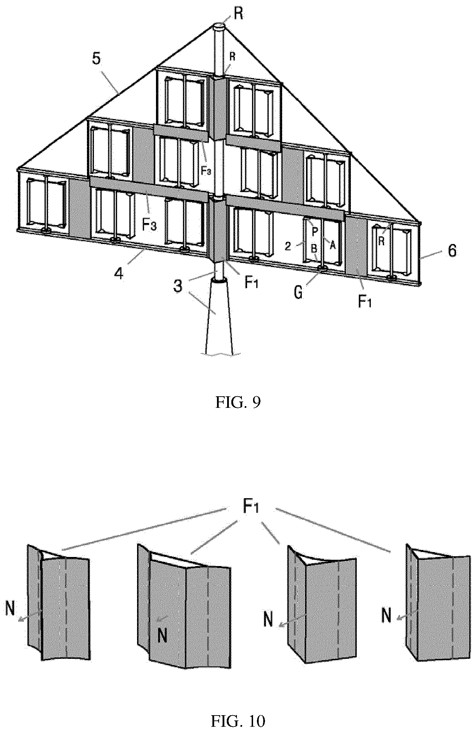

A wind turbine in this embodiment is shown in FIG. 9. A load-bearing body includes a tower 3 constituted by a conical tube and a cylindrical tube. A truss includes four cross beams 4, six upright columns 6, and two inclined struts 5. Two ends of the upright column 6 are fixedly connected to adjacent upper and lower cross beams 4 in each row. The two inclined struts 5 are fixedly connected to two ends of each cross beam 4. A truss having a three-row structure is formed and rotatably connected to the cylindrical tube of the tower 3 via a bearing R disposed between the two inclined struts 5 and bearings R disposed at central portions of the cross beams 4. There are two types of windshield devices F1: the first type includes a triangular structure shield fixedly connected to the cross beams 4 and disposed across the tower 3; and the second type includes a planar shield fixedly connected to the cross beam 4. A wind wheel includes a wheel frame and two blades 2 uniformly distributed at a periphery of the wheel frame. The wheel frame includes a spindle A and four cantilevers B. One end of the cantilever B is fixedly connected to the spindle A, the other end of the cantilever B is fixedly connected to the blade 2 via a baffle P. The wind wheels and the truss constitute an axially-constrained horizontal-revolute pair. Twelve wind wheels constitute six pairs of counter-rotating wind wheels by placing the blades 2 of a half of twelve wind wheels upside down with respect to the blades 2 of the other half of twelve wind wheels, and are respectively and rotatably connected to adjacent upper and lower cross beams 4 via bearings R and electric generators G. The counter-rotating wind wheels in each pair are symmetrically disposed at two sides of the windshield device F1. A windshield device F3 includes a planar shield fixedly connected to the cross beam 4 located between adjacent upper and lower wind wheels to divert the incoming wind to pass through upper and lower wind wheel regions.

### Embodiment 5

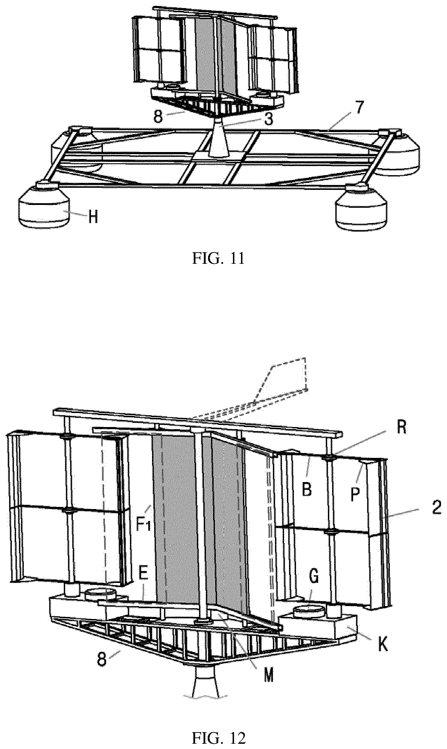

A wind turbine in this embodiment is shown in FIG. 11, and an enlarged view of an upper area in FIG. 11 is shown in FIG. 12. A load-bearing body includes four buoys H, a horizontal frame 7 fixedly connected to tops of the buoys H, and a tower 3 (having a structure the same as that in the Embodiment 3) fixedly connected onto the horizontal frame 7. A truss 8 is substantially the same as that shown in FIG. 8, except two aspects: in the first aspect, two inner upright columns 6 are directly fixedly connected to the cross beams 4 (without using the bearing R); and in the second aspect, the lower cross beam 4 has a frame structure, and the truss 8 is rotatably connected to the cylindrical tube of the tower 3 via a bearing R disposed at a central portion of the cross beam 4. A windshield device F1 includes two planar plates and four guide rails E. Two ends of the planar plate are respectively slidably connected to the two guide rails E. The guide rail is respectively and fixedly connected to portions of the two upright columns 6 adjacent to two ends of the two upright columns 6. A wind wheel includes a wind frame having a two-row structure and two blades 2 uniformly distributed at a periphery of the wheel frame, each having two sections. The wheel frame includes six cantilevers B disposed in three rows. One end of the upper cantilever B and one end of the middle cantilever B are connected to the bearing R via flanges. One end of the lower cantilever B is fixedly connected to an input shaft of a gearbox K. The other end of the upper cantilever B and the other end of the lower cantilever B are respectively and fixedly connected to upper and lower sections of the blade 2 via baffles P. The other end of the middle cantilever B is connected to the upper and lower sections of the blade 2. The wind wheels and the truss 8 constitute an axially-constrained horizontal-revolute pair. Two wind wheels constitute a pair of counter-rotating wind wheels by placing the blades 2 of one wind wheel upside down with respect to the blades 2 of the other one wind wheel, and are respectively and rotatably connected to the two outer upright columns 6 of the truss 8 via bearings R and gearboxes K. The through tube shaped input shaft of the gearbox K is sleeved on a lower end of the outer upright column 6. The gearbox K is fixedly connected to a top of the lower cross beam 4 to drive an electric generator G. A controller M controls the windshields to move in the guide rails E to azimuths shown with broken lines, so that a power control of the wind turbine can be achieved.

### Embodiment 6

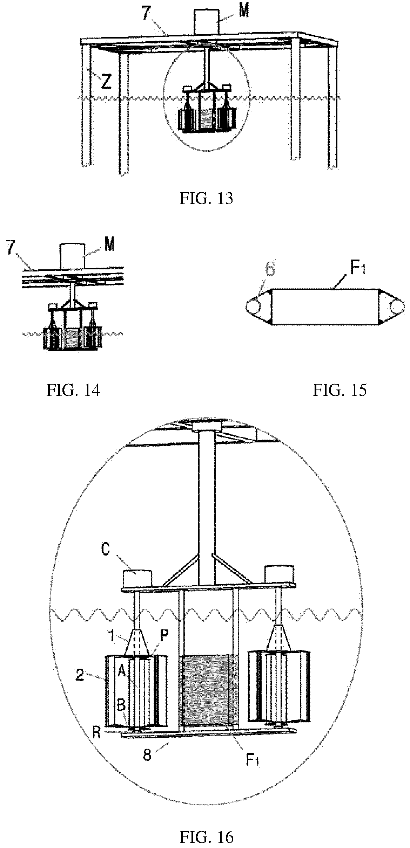

A water turbine in this embodiment is shown in FIG. 13. FIG. 16 is an enlarged view of a circled area in FIG. 13. A load-bearing body includes four pillars Z inserted into the water bottom and a horizontal frame 7 fixedly connected to tops of the pillars Z. A structure of a truss 8 and a connection manner of the truss 8 with the horizontal frame 7 are the same as those in the Embodiment 2. A windshield device F1 includes a rectangular column and two curved sheets (cross sections of which are shown in FIG. 15) fixedly connected to the rectangular column via four triangular prisms. The two curved sheets are respectively and fixedly connected to the two inner upright columns 6. A water wheel includes a wheel frame and three blades 2 uniformly distributed at a periphery of the wheel frame. The wheel frame includes a spindle A, six cantilevers B, and six baffles P. One end of the cantilever B is fixedly connected to the spindle A, and the other end of the cantilever B is fixedly connected to the blade 2 via the baffle P. A gas cabin 1 having a conical outer surface and a cylindrical inner surface is fixedly connected to an upper periphery of the spindle A. The water wheels and the truss 8 constitute an axially-constrained horizontal-revolute pair. Two water wheels constitute a pair of counter-rotating water wheels by placing the blades 2 of one water wheel upside down with respect to the blades 2 of the other one water wheel, and are respectively and rotatably connected between the two cross beams 4 via bearings R and cabins C. Upper ends of the spindles A of the two water wheels respectively pass through holes defined at two ends of the upper cross beam 4 to be connected to gearboxes in the cabins C located at two sides, so as to drive electric generators. Buoyancy caused by filling gas into the gas cabin 1 can reduce a rotational resistance of the water wheel. Ascending and descending operations can be further performed between the horizontal frame 7 and the truss 8, so that a power control can be achieved. When the water current speed is high enough to cause a power of the water wheel to be higher than a rated power, the controller M ascends the upper upright column 6 to allow a part of the water wheel to be protruded out from the water surface (as shown in FIG. 14), which reduces a power generation area of the water wheel. This embodiment is appropriate to the relatively shallow water area, for example, the water current under the river can be used to generate electricity.

### Embodiment 7

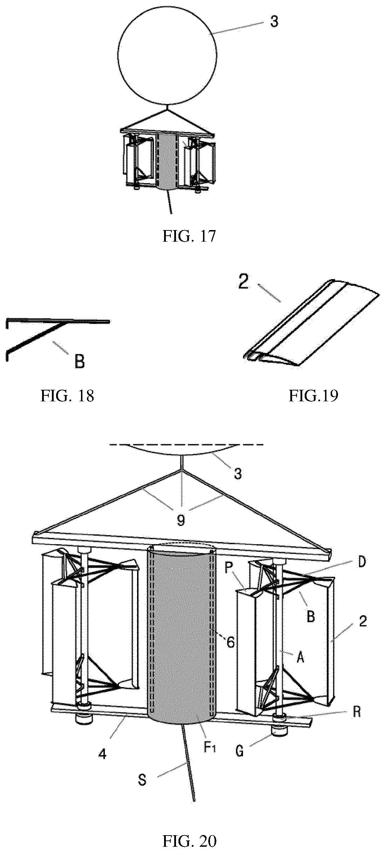

A wind turbine in this embodiment is shown in FIG. 17. FIG. 20 is an enlarged view of a lower area of the FIG. 17. A load-bearing body includes a floater 1 floating in the air and a rope 9 tied to the floater 1. A truss includes two cross beams 4 and two upright columns 6 fixedly connected between the cross beams 4. The upper cross beam 4 is fixedly connected to the rope 9. A windshield device F1 includes a gasbag having a cylindroid outer surface, two cylindrical inner surfaces vertically extending through the gasbag, and oval rigid end plates fixedly connected to two ends of the gasbag and each having two circular inner holes. The two circular inner surfaces of the gasbag and the two circular inner surfaces of the end plate are sleeved on the two upright columns 6, and the gasbag is respectively and fixedly connected to the upper cross beam 4 and the lower cross beam 4 via the two end plates. A wind wheel includes a wheel frame and three blades 2 uniformly distributed at a periphery of the wheel frame. The wheel frame includes a spindle A, six reinforced cantilevers B as shown in FIG. 18, and six cross bars D. A double-headed end of the cantilever B is fixedly connected to the spindle A, and a single-headed end of the cantilever B is fixedly connected to the blade 2 via the baffle P. Two ends of the cross bar D are fixedly connected to adjacent cantilevers B. The wind wheels and the truss constitute an axially-constrained horizontal-revolute pair. Two wind wheels constitute a pair of counter-rotating wind wheels by placing the blades 2 of one wind wheel upside down with respect to the blades 2 of the other one wind wheel, and are respectively and rotatably connected the truss via bearings R. Lower ends of the spindles A of the two wind wheels respectively pass through holes defined at two ends of the lower cross beam 4 to drive electric generators located at two sides, thereby constituting an air-floating wind driven generator which is rotatable about its gravity center vertical axis, and is connected to an anchor cable S to be anchored to the ground or a building on the ground. The electric power can be transmitted to a ground station via a wire contained in the anchor cable S. The truss and the wind wheel can be made by a light material to reduce loads of the floater 1. The reinforced wheel frame constituted by the reinforced cantilevers B and the cross bars D is specialized for the usage of the light material.

Only some of various shapes of the windshield are illustrated in the above-described embodiments. Other shapes (four of which are shown in FIG. 10, wherein the arrow N represents a windward direction) can also be used. The shape of the windshield in the present disclosure can be synthetically determined according to factors such as the specific structure of the truss, the application scenario, and the power capacity, and the control manner.

Further features of the present disclosure are described as below.

Rotation directions of the wind wheels located at two sides of the windshield device F1 are set to allow a power output region of the blade to be located at a side adjacent to the windshield. The power output region refers to an azimuth region within which the blade can output power. An attack angle of the blade is varied in 360 degrees during the rotation. However, the blade can output power only at the azimuth in several tens of degrees, but cannot output power at the other azimuth angles due to the stall. The rotation axis of the truss and the rotation axes of the wind wheels are in a same vertical plane. The numbers of the wind wheels located at two sides of the rotation axis of the truss are the same, and the wind wheels are symmetrically located at the two sides of the rotation axis of the truss, which are embodied in all embodiments as descried above.

The windshield device can have further functions. For example, in the water turbines in Embodiments 1, 2, and 6, the windshields have enclosed hollow cavity structures. The buoyancy produced by filling gas into the hollow cavity can reduce the rotation resistances of the water wheels and the trusses. For example, for the wind turbine in the Embodiment 7, the buoyancy produced by filling hydrogen or helium gas into the gasbag of the windshield can reduce the loads of the floater. For example, the windshield devices F1 in Embodiments 1 and 4 have reinforcement effects on rigidities of the trusses.

For the windshield device F2 disposed in the wind turbine without the spindle, the windshield is non-rotatable and has an asymmetrical shape with respect to the wheel axis; therefore, an interference effect on the flow field in the wind wheel can be achieved by regulating the azimuth and the shape of the windshield, which is embodied in the Embodiment 3.

By using the FW blade having a high efficiency at low flow rate as shown in FIG. 19 developed by the inventor, as embodied in the Embodiments 5 and 6, the effect is that the wind energy utilization coefficient is significantly increased, a pitch variation system is not required, and the operation is highly effective. Since the pitch variation control device in prior art is saved, the cost of the device is reduced.

By disposing the rotatable connection portions of the wheel frames with the load-bearing body above the water surface and disposing the load-bearing frame adjacent to the water surface, no component with dynamic seal needs to be disposed underwater, as embodied in Embodiments 2 and 6. The effect is that it is advantageous to improve performance and easy to maintain, thereby reducing the cost, and the water current at the water surface having a high speed (as compared to that deep down under water) can be fully utilized, which is advantageous to increase the Cp.

By using buoys to load bear, the building of underwater foundation is saved, as embodied in Embodiments 2 and 5. The effect is that the cost is reduced, the turbine can be anchored by an anchor chain or moved by a tugboat according to water conditions, which is convenient and flexible.

In addition to the above-described embodiments, the present disclosure can also include other implementation manners. For example, the water turbines in the Embodiment 2 and the wind turbines in the Embodiment 5 can share the same set of the buoys H and the horizontal frame 7, thereby forming a wind and water dually-useful turbine. For example, a wind rudder (shown with broken lines on the central portion of the upper cross beam in FIG. 12) is further provided in the Embodiment 5, which can neutralize the oscillation of the truss 8 caused by varied wind direction during the power control. For example, the load-bearing body in the Embodiment 6 can be replaced with a load-bearing structure (such as a bridge) which has been established on water, the truss 8 can be connected to a bottom of the bridge. For example, a plurality of water turbines in the Embodiment 2 are flexibly connected and the buoys H are shared by two adjacent horizontal frames 7, thereby forming a water turbine set. Any technical solutions formed by means of equivalent replacement or equivalent transformation all fall within the protection scope claimed by the present disclosure.

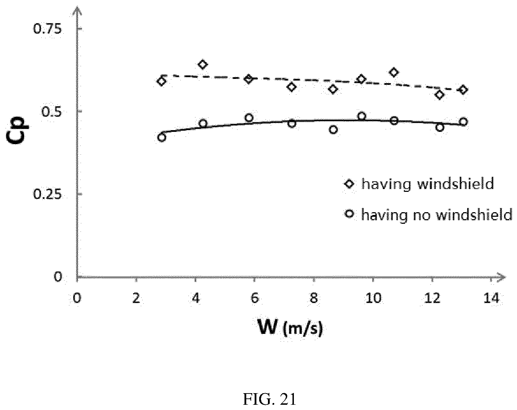

FIG. 21 shows a Cp vs.W curve obtained in a wind tunnel test, illustrating the Cp increasing effect of the windshield device in the present disclosure. In the wind speed W range of 2 m/s to 13m/s, the rotation direction settings of the windshield device and the wind wheel cause the Cp to be averagely increased by 22% as compared to with no windshield. In the range of W < 7m/s, the Cp is increased more significantly, and a best value of Cp is obtained in the low wind speed end (in the case where no windshield is used, a best value of Cp is obtained in the range of 7 m/s to 8m/s at the curve), suggesting that the windshield device has a speed increasing effect of 10% on low wind speed. When the windshield devices are applied in the wind power generation, an increasing effect of more than 20% on electric energy production can be obtained. Moreover, the difficulties in the power control in the traditional vertical axis wind turbine are solved. Therefore, the windshield devices improve the cost performance of the wind turbine. Combined with the FW blade having a high efficiency at low flow rate developed by the inventors, for the device in the present disclosure, Cpₘₐₓ is 0.60, and in the wind speed range of 2 m/s to 10m/s, the Cp at the mean wind speed causes the electric energy production to be higher than 3 to 3 times of the conventional vertical axis technology.

In summary, in the present disclosure, the Cp at low wind speed (flow rate) is significantly increased, and its utilization cost is reduced, thereby having the characteristic (i.e. high performance and low cost) of the advanced technology. Not only resourceful tidal current, ocean current, river current, and gentle wind can be used to generate electricity, but other use patterns of the low flow rate fluid can be also developed.

## Claims

1. A power device for increasing low flow rate, comprising a load-bearing body, a truss connected to the load-bearing body, and at least two wind wheels connected to the truss, wherein the wind wheel comprises a wheel frame and a plurality of blades uniformly distributed at a periphery of the wheel frame; the truss and the wind wheels constitute a vertically-constrained horizontal-revolute pair; the wind wheels are respectively disposed at two sides of a center vertical line of the truss; **characterized in that** a windshield device is located between the wind wheels, the wind wheels located at two sides of the windshield device have opposite rotation directions, the rotation directions of the wind wheels are set to allow a power output region of the blade to be located at a side adjacent to the windshield device, the truss is rotatably connected to the load-bearing body, a rotation axis of the truss and rotation axes of the wind wheels are located in a same vertical plane.

2. The power device for increasing low flow rate of claim 1, **characterized in that** the wheel frame of the wind wheel is a spindle-containing wheel frame or a spindle-free wheel frame; when the wheel frame is the spindle-containing wheel frame, the wheel frame of the wind wheel comprises a spindle and cantilevers, one end of the cantilever is directly or indirectly connected to the spindle, and the other end of the cantilever is directly or indirectly connected to the blade; when the wheel frame is the spindle-free wheel frame, the wheel frame comprises cantilevers, one end of the cantilever is connected to the truss or a load via a bearing, and the other end of the cantilever is directly or indirectly connected to the blade.

3. The power device for increasing low flow rate of claim 2, **characterized in that** a windshield device is disposed in the wind wheel, a horizontal size of the windshield device is smaller than a diameter of the wind wheel, and a vertical size of the windshield device is smaller than a height of the wind wheel.

4. The power device for increasing low flow rate of claim 1, **characterized in that** the truss comprises a plurality of cross beams, a plurality of upright columns to support the plurality of cross beams, or further comprises a plurality of inclined struts; when the truss comprises more than two cross beams, a truss structure having a plurality of rows of cross beams in a vertical direction is constituted, and a windshield device is further disposed between upper and lower wind wheels in two adjacent rows.

5. The power device for increasing low flow rate of claim 3 or 4, **characterized in that** a structure of the windshield device comprises a windshield device formed by a sheet or a column, and a windshield device formed by a combination of a sheet and a column; a sealed hollow cavity is defined in the windshield device; and a shape of the windshield device comprises a planar plate, a curved plate, an arc-shaped plate, a triangular prism formed by planar plates, by curved plates, by arc-shaped plates, by two curved plates and one planar plate, by two planar plates and one curved plates, a half-cylinder, a trapezoidal prism, a cylinder, a cylindroid, and a column having a sinuous surface.

6. The power device for increasing low flow rate of claim 5, **characterized in that** the power device controls a power of the wind wheel by regulating an azimuth or a wind-blocking area of the windshield device; the power device is further provided with a wind rudder to follow wind direction.

7. The power device for increasing low flow rate of claim 1, **characterized in that** a placement manner of the load-bearing body comprises placing on ground, placing under water, floating on water surface, standing on water bottom while protruding out from water surface, and floating in air;
when the load-bearing body is placed on ground or under water, the load-bearing body comprises a tower standing on the ground, or comprises a base located under the water and a tower fixedly connected to the base, a top of the tower is connected to the truss, the wind wheels are connected to the truss, and the windshield device is connected to the truss; or a windshield device is further disposed in the wind wheel;
when the load-bearing body floats on water surface, the load-bearing body comprises a plurality of buoys and a horizontal frame fixedly connected onto the buoys, a bottom surface of the horizontal frame is connected to the truss, the wind wheels are connected to the truss, and the windshield device is connected to the truss, thereby obtaining a water turbine; or the load-bearing body comprises a plurality of buoys, a horizontal frame fixedly connected onto the buoys, and a tower standing on the horizontal frame, a top of the tower is connected to the truss, the wind wheels are connected to the truss, and the windshield device is connected to the truss, thereby obtaining a wind turbine; or a complete of the water turbine is connected to a bottom of the horizontal frame of the wind turbine, thereby obtaining a wind and water dually-useful turbine; or the windshield device is further disposed in the wind wheel of the water turbine, the wind turbine, or the wind and water dually-useful turbine;
when the load-bearing body stands on water bottom while protrudes out from water surface, the load-bearing body comprises a plurality of pillars standing in water and a horizontal frame fixedly connected to portions of the pillars protruded out from the water surface, a bottom surface of the horizontal frame is connected to the truss, the wind wheels are connected to the truss, and the windshield device is connected to the truss, thereby obtaining a water turbine; or the load-bearing body comprises a plurality of pillars standing in water, a horizontal frame fixedly connected to portions of the pillars protruded out from the water surface, and a tower standing on the horizontal frame, a top of the tower is connected to the truss, the wind wheels are connected to the truss, and the windshield device is connected to the truss, thereby obtaining a wind turbine; or a complete of the water turbine is connected to a bottom of the horizontal frame of the wind turbine, thereby obtaining a wind and water dually-useful turbine; or the windshield device is further disposed in the wind wheel of the water turbine, the wind turbine, or the wind and water dually-useful turbine;
when the load-bearing body floats in air, the load-bearing body comprises a floater floating in the air and a rope-like member tied to the floater; the truss is connected to the rope-like member, the wind wheels are connected to the truss, and the windshield device is connected to the truss, thereby obtaining a wind turbine floating in the air; or the windshield device is further disposed in the wind wheel; the wind turbine is anchored on ground or a building on the ground via an anchor cable.

8. The power device for increasing low flow rate of claim 7, **characterized in that** two to five blades are uniformly distributed at the periphery of the wheel frame, thereby obtaining a two-blade wind wheel, a three-blade wind wheel, a four-blade wind wheel, and a five-blade wind wheel, respectively; the blade is FW blade having a high efficiency at low flow rate; a number of the wind wheels disposed at two sides of a rotation axis of the truss are the same, and the wind wheels are symmetrically located at the two sides of the rotation axis of the truss.

9. The power device for increasing low flow rate of claim 8, **characterized in that** the wheel frame has a multi-row structure, the cantilevers of the wheel frame are arranged in rows, each blade has a plurality of sections, a number of the sections is corresponding to a number of the rows of the cantilevers, each section of the blade is disposed at ends of the corresponding cantilevers located in adjacent rows.

10. The power device for increasing low flow rate of claim 7, **characterized in that** a floating water turbine set is formed by a plurality of the floating water turbines constituted by the load-bearing body floating on the water surface.

11. The power device for increasing low flow rate of claim 7, **characterized in that** a rotatable connection portion of the wheel frame with the load-bearing body is disposed above the water surface.

12. The power device for increasing low flow rate of claim 7, **characterized in that** the wheel frame of the water turbine is connected to a buoyancy-producing gas cabin, a shape of the gas cabin is a cylindrical shape, a conical shape, or a spherical crown shape.

13. The power device for increasing low flow rate of claim 7, **characterized in that** the load-bearing body comprises a bridge or a load-bearing member which has been established on the water.
